# EUROPEAN PATENT APPLICATION

(11) **EP 4 582 366 A1**
(43) Date of publication of application: **09.07.2025**
(21) Application number: 23927827.8
(22) Date of filing: 08.11.2023
(51) Int. Cl.: B66B 5/00, B66B 1/34, G06Q 50/10

(54) **ELEVATOR MAINTENANCE SYSTEM**

(30) Priority: 07.11.2023 KR 20230152378
(71) Applicant: Hyundai Elevator Co., Ltd., Chungju-si, Chungcheongbuk-do (KR)
(72) Inventor: LEE, Hong Chang, Chungju-si, Chungcheongbuk-do 27329 (KR); PARK, Ji Hye, Chungju-si, Chungcheongbuk-do 27329 (KR); KWON, Young Soo, Chungju-si, Chungcheongbuk-do 27329 (KR); KUM, In Soo, Chungju-si, Chungcheongbuk-do 27329 (KR); YOUN, Suk Jun, Chungju-si, Chungcheongbuk-do 27329 (KR)
(74) Representative: Baldus, Oliver
(86) International application number: PCT/KR2023/017922
(87) International publication number: WO 2025/100592

(57) **Abstract**

A central management server includes a W/A code collecting unit configured to collect a code (W/A code) indicating an abnormality signal, wherein the W/A code is generated by at least one of each of components operating an elevator, a control panel corresponding to the elevator, and a terminal corresponding to the control panel and is configured to include a code representing a W/A code generating entity and a problem, a W/A code database configured to store the received W/A code, information for interpreting the W/A code, and a determination reference, and a determination unit configured to set at least one of a warning state and an alert state for an inspection item of the elevator based on the W/A code and the determination reference.

## Description

### Technical Field

The present disclosure relates to an elevator maintenance system.

### Background Art

If a malfunction occurs in an elevator device, even if the malfunction is diagnosed remotely, an elevator maintenance worker may arrive at the scene after the malfunction occurs and repair the malfunction, so users cannot use the elevator during a repair period. Therefore, it is very important to predict the malfunction of the elevator in advance.

### [Related art documents]

Korean Patent No. 10-1775529
Korean Patent No. 10-2348616
Korean Application Publication No. 10-2007-0048010.

### Disclosure

### Technical Problem

The present disclosure provides an elevator maintenance system that detects signs of malfunction in an elevator.

The present disclosure provides an elevator maintenance system with improved accuracy according to a determination result of determining signs of malfunction in an elevator.

The present disclosure provides an elevator maintenance system that transmits a warning or alert signal so that maintenance and repair may be performed before an elevator actually malfunctions.

### Technical Solution

According to an embodiment of the present disclosure, an elevator maintenance system includes a maintenance terminal carried by a maintenance worker; and a central management server that collects and stores operational state signals of an elevator from an elevator control panel, analyzes the collected and stored operational state signals, determines malfunction sign information for each inspection item of the elevator, and transmits the malfunction sign infomration to the maintenance terminal, wherein the maintenance terminal displays a determiation result of the malfunction sign information for each inspection item of the elevator.

At this time, the malfunction sign information may include malfunction warning and malfunction alert states. In addition, a warning alert display screen displaying a determimation result of malfunction warning and malfunction alert states for each of inspection items of the elevator may be formed on the maintenance terminal, and an evaluation input section allowing a maintenance worker to input an evaluation opinion with respect to the determination result of the malfunction warning and alert state displayed for each of the inspection items of the elevator may be formed on the warning alert display screen.

In addition, the central management server may collect and store the evaluation opinion input through the evaluation input section and determine the malfunction warning and malfunction alert states for the inspection items of the elevator by considering the evaluation opinion collected and stored in the past.

In addition, the maintenance terminal may be provided with a regular inspection writing screen in which a regular inspection process for the elevator may be entered, a warning alert confirmation button may be provided on the regular inspection writing screen in which a determination result of the malfunction warning and malfunction alert states may be confirmed, and when the warning alert confirmation button is operated, the warning alert display screen may be displayed.

In addition, the warning alert confirmation button may be displayed to be identified differently depending on the determination result of the malfunction warning and malfunction alert states of the central management server.

In addition, the central management server may include an operating signal storage unit that classifies and stores operational state signal information of the elevator collected from the elevator control panel by the inspection items; an evaluation opinion storage unit that stores evaluation opinion information through the evaluation input section by the inspection items; and a warning alert determination unit that compares the operational state signal information for each inspection item stored in the operating signal storage unit with a first determination reference and a second determination reference set for each inspection item and determines the malfunction warning and malfunction alert states, wherein the warning alert determination unit may newly set the first determination reference and the second determination reference by reflecting the evaluation opinion information stored in the evaluation opinion storage unit.

In addition, the first determination reference may include a first threshold reference that sets an allowable range for a signal value of the operational state signal for each inspection item and a first threshold count reference that sets an allowable range for the number of times the signal value of the operational state signal for each inspection item exceeds the first threshold reference, and the warning alert determination unit may compare the operational state signal information for each inspection item stored in the operating signal storage unit with the first threshold count reference to determine whether an operational state corresponds to a malfunction warning state for each inspection item.

In addition, the warning alert determination unit may newly set at least one of the first threshold reference and the first threshold count reference based on the evaluation opinion information stored in the evaluation opinion storage unit.

In addition, the second determination reference may include a second threshold reference that sets an allowable range for a signal value of the operational state signal for each inspection item and a second threshold count reference that sets an allowable range for the number of times the signal value of the operational state signal for each inspection item exceeds the second threshold reference, at least one of the second threshold reference and the second threshold count reference may be formed with a greater allowable range than the first threshold reference and the first threshold count reference, and the warning alert determination unit may compare the operational state signal information for each inspection item stored in the operating signal storage unit with the second threshold count reference to determine whether an operational state corresponds to a malfunction warning state for each inspection item.

In addition, the warning alert determination unit may newly set at least one of the second threshold reference and the second threshold count reference based on the evaluation opinion information stored in the evaluation opinion storage unit.

According to another embodiment of the present disclosure, an elevator maintenance method includes collecting and storing, by a central management server, an elevator operational state signal from an elevator control panel; analyzing, by the central management server, the operational state signal and determining malfunction warning and malfunction alert states for each inspection item of the elevator; transmitting, by the central management server, a determination result of the malfunction warning and malfunction alert states to a maintenance terminal; displaying the determination result of the malfunction warning and malfunction alert states through the maintenance terminal; inputting an evaluation opinion of a maintenance worker on the determination result of the malfunction warning and malfunction alert states through the maintenance terminal; and collecting and storing, by the central management server, the evaluation opinion input through the maintenance terminal, wherein, in the determining of the the malfunction warning and malfunction alert states, the central management server determines by considering a past evaluation opinion of the maintenance worker stored in the central management server.

According to another embodiment of the present disclosure, a central management server includes: a W/A code collecting unit configured to collect a code (W/A code) indicating an abnormality signal, wherein the W/A code is generated by at least one of each of components operating an elevator, a control panel corresponding to the elevator, and a terminal corresponding to the control panel and is configured to include a code representing a W/A code generating entity and a problem; a W/A code database configured to store the received W/A code, information for interpreting the W/A code, and a determination reference; and a determination unit configured to set at least one of a warning state and an alert state for an inspection item of the elevator based on the W/A code and the determination reference.

In an embodiment, the determination reference may include a number of occurrences of the W/A code.

In an embodiment, the determination reference may include a number of occurrences of the W/A code in a pre-selected time interval.

In an embodiment, the determination reference may include a number of occurrences of the W/A code in a first pre-selected time interval and a number of occurrences in a second pre-selected interval.

In an embodiment, the components operating the elevator may include an inverter.

In an embodiment, the W/A code collecting unit may be further configured to collect a signal indicating the operational state of the elevator, and the determination unit may be further configured to generate a new W/A code based on the signal indicating the operational state of the elevator and a pre-selected reference.

In an embodiment, the signal indicating the operational state of the elevator may be a signal configured not to indicate a diagnosis subject.

According to another embodiment of the present disclosure, an elevator system includes: an inverter configured to drive an elevator and generate a first W/A code, wherein the first W/A code includes a code representing a problem in driving the elevator; a control panel electrically connected to the inverter and configured to store the first W/A code; a terminal configured to transmit the first W/A code stored in the control panel; and a central management server configured to receive the first W/A code from the terminal and set at least one of a warning state and an alert state for an inspection item of the elevator based on the first W/A code and a pre-selected reference.

In an embodiment, the first W/A code may further include a code representing the inverter, the control panel may be further configured to generate and transmit a second W/A code to the central management server, wherein the second W/A code may be configured to include a code representing a generating entity and a problem, and the central management server may be configured to set at least one of the warning state and the alert state for the inspection item of the elevator based on the second W/A code and the pre-selected reference.

In an embodiment, the first W/A code may further include a code representing the inverter, the terminal may be further configured to generate and transmit a third W/A code to the central management server, wherein the third W/A code may be configured to include a code representing a generating entity and a problem, and the central management server may be configured to set at least one of the warning state and the alert state for the inspection item of the elevator based on the third W/A code and the pre-selected reference.

In an embodiment, the central management server may be further configured to receive a signal including a code representing an operational state of the elevator and generate a fourth W/A code based on the signal including the code representing the operational state of the elevator and the pre-selected reference.

In an embodiment, the signal including the code representing the operational state of the elevator may not include a generating subject.

According to another embodiment of the present disclosure, a method for remotely monotoring an elevator includes: generating, by an elevator driving component, a first W/A code, wherein the first W/A code is configured to include a code representing a problem in driving the elevator; detecting, by a control panel, and storing the first W/A code; transmitting, by a terminal, the stored first W/A code to a central management server; and receiving, by the central management server, the first W/A code and setting at least one of a warning state and an alert state for an inspection item of the elevator based on the first W/A code and a pre-selected reference.

In an embodiment, the elevator driving component may include an inverter.

In an embodiment, the first W/A code may further include a code representing the inverter, and wherein the method may further include: generating, by the inverter, a signal including a code representing an operational state of the elevator without including a generating subject; collecting, by the central management server, a signal including a code representing an operational state of the elevator; and generating, by the central management server, a fourth W/A code based on a signal including a code representing the operational state of the elevator and a pre-selected reference.

### [Advantageous Effects]

By detecting signs of malfunction before malfunction occurs in an elevator, malfunction warning and malfunction alert states are determined and a determination result is transmitted to a maintenance terminal, thereby inducing a maintenance worker to inspect corresponding inspection items to prevent the occurrence of malfunction in advance.

By allowing a maintenance worker to evaluate the determination result of the warning and alert state and input an evaluation opinion, the warning and alert state may be determined by reflecting the evaluation opinion of the maintenance worker, thereby improving accuracy of the determination results for the malfunction signs.

By collecting abnormal operations in various modules that constitute the elevator system in real time, analyzing and managing the abnormal operations, and generating warning and/or alert signals, an on-site situation may be notified before a malfunction occurs and advance inspection support may be provided.

### [Description of Drawings]

FIG. 1 is a view conceptually illustrating the entire configuration of an elevator maintenance system according to an embodiment of the present disclosure.
FIG. 2 is a view conceptually illustrating the entire configuration of an elevator maintenance system according to another embodiment of the present disclosure.
FIG. 3 is a block diagram functionally illustrating a configuration of a central management server and a maintenance terminal of an elevator maintenance system according to an embodiment of the present disclosure.
FIG. 4 is a flowchart illustrating a process of determining malfunction warning and malfunction alert states of an elevator maintenance system according to an embodiment of the present disclosure.
FIG. 5 is a view illustrating a regular inspection writing screen and a warning alert confirmation button displayed on a maintenance terminal according to an embodiment of the present disclosure.
FIG. 6 is a view illustrating a warning alert display screen and an evaluation input section displayed on a maintenance terminal according to an embodiment of the present disclosure.
FIG. 7 is a block diagram illustrating an example of an elevator maintenance system according to an embodiment of the present disclosure.
FIG. 8 is a block diagram illustrating an example of an elevator maintenance system according to an embodiment of the present disclosure.
FIGS. 9 to 11 are diagrams illustrating screens displayed on a maintenance terminal according to an embodiment of the present disclosure.
FIG. 12 is a flowchart illustrating a process of training a central management server of an elevator maintenance system according to an embodiment of the present disclosure.
FIG. 13 is a flowchart illustrating a process of determining a warning and alert state of an elevator maintenance system according to an operational flow according to an embodiment of the present disclosure.

### [Best Mode]

Hereinafter, embodiments will be described in detail with reference to the accompanying tables and drawings such that they may be easily practiced by those skilled in the art to which the present disclosure pertains. However, the present disclosure may be implemented in various forms and is not limited to the embodiments described herein.

In the accompanying drawings, a portion irrelevant to description of the present disclosure will be omitted for clarity, and like reference numerals refer to like elements throughout.

Throughout the specification, unless explicitly described to the contrary, the word "comprise" and variations, such as "comprises" or "comprising", will be understood to imply the inclusion of stated elements but not the exclusion of any other elements.

It should be appreciated that various embodiments of the present disclosure and the terms used therein are not intended to limit the technological features set forth herein to particular embodiments and include various modifications, equivalents, or alternatives for a corresponding embodiment.

An expression "configured to (or set)" used in the present disclosure may be replaced with, for example, "suitable for," "having the capacity to," "designed to," "adapted to," "made to," or "capable of" according to a situation. A term "configured to (or set)" does not always mean only "specifically designed to" by hardware. Alternatively, in some situation, an expression "apparatus configured to" may mean that the apparatus "can" operate together with another apparatus or component.

The prior art documents described in this disclosure are incorporated herein by reference in their entirety, and it will be understood that a person skilled in the art may apply the contents described in the prior art documents to the parts briefly described in this disclosure.

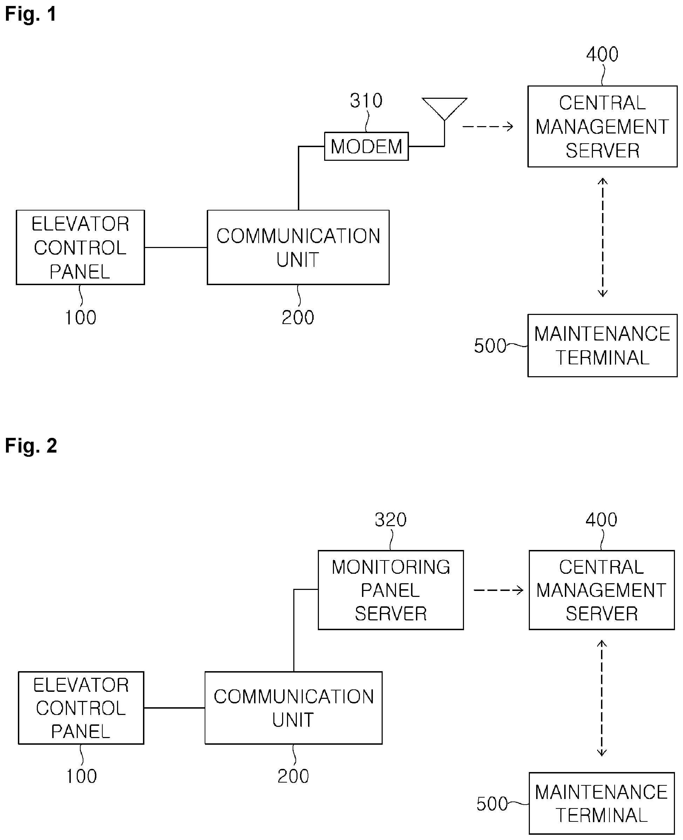

FIG. 1 is a conceptual view illustrating the entire configuration of an elevator maintenance system according to an embodiment of the present disclosure. FIG. 2 is a conceptual view illustrating the entire configuration of an elevator maintenance system according to another embodiment of the present disclosure.

An elevator maintenance system according to an embodiment of the present disclosure may include a maintenance terminal 500 carried by a maintenance worker and a central management server 400 that collects and stores an operational state signal of an elevator from an elevator control panel 100, analyzes the operational state signal, and determines malfunction sign information for each inspection item of the elevator. The malfunction sign information may include a malfunction warning state and a malfunction alert state. The malfunction warning state and the malfunction alert state will be described below.

Hereinafter, a detailed configuration of an elevator maintenance system according to an embodiment of the present disclosure will be examined in more detail.

The central management server 400 may transmit a determination result for the malfunction warning and malfunction alert states to the maintenance terminal 500. The maintenance terminal 500 may display the determination result of the malfunction warning and malfunction alert states for each inspection item of the elevator transmitted from the central management server 400 on the screen.

In the present embodiment, it is described that the central management server 400 determines the malfunction sign and transmits the determination result to the maintenance terminal 500. Meanwhile, in another embodiment, it is also possible for a malfunction sign to be determined by at least one of the elevator control panel 100, the central management server 400, and the maintenance terminal 500. If the malfunction sign is determined by two or more components, the reliability based on the malfunction determination may be improved.

First, referring to the overall system configuration, the elevator may generally include the control panel 100 that controls an operational state of the elevator. The control panel 100 may receive various operational state signals generated from the elevator, and these operational state signals may include a normality signal, an abnormality signal, and a fault signal. The normality signal may refer to a signal generated when a corresponding inspection part is normal. The fault signal may refer to a signal generated when the corresponding inspection part malfunctions. The abnormality signal may refer to a signal that occurs when an operational state signal generated from the corresponding inspection part is out of a normal range but is not in a complete malfunction state. In an embodiment, the abnormality signal may include a warning signal and an alert signal. In an embodiment, the operational state signal may include a signal regarding an actual operation of elevator components.

The operational state signal of the elevator may be generated by a plurality of sensors installed in the elevator. The control panel 100 may receive the operational state signal of the elevator through these sensors. All signals regarding the operational state of the elevator may be received and stored in the control panel 100.

The operational state signal of the elevator may be transmitted in real time to the central management server 400 through the communication unit 200. As illustrated in FIG. 1, the communication unit 200 may communicate with the central management server 400 through a modem 310 thereof and transmit operational state signal information of the elevator. As shown in FIG. 2, in a case in which a separate monitoring panel exists, the communication unit 200 may communicate with the central management server 400 through the monitoring panel server 320 and transmit the corresponding information.

The central management server 400 may store the operational state signal of the elevator transmitted from the elevator control panel 100 through the communication unit 200. The central management server 400 may analyze the operational state signal and determine a malfunction warning and malfunction alert states for each inspection item of the elevator. In an embodiment, the information of the control panel 100 may be detected by a terminal (not shown) and transmitted to the central management server 400.

The central management server 400 may be applied as a server of various forms according to the needs of a user. In addition, the central management server 400 may be connected to the maintenance terminal 500 through the Internet. The elevator operational state signal information, etc. may be transmitted from the central management server 400 to the maintenance terminal 500. The maintenance terminal 500 may be connected to the central management server 400 through an application program to receive elevator operational state signal information and a determination result of the malfunction warning and malfunction alert states. More specifically, the maintenance terminal 500 may display the number of malfunction warning or malfunction alert codes accumulated for each elevator part and guide contents, such as an expected cause, an item to be checked, etc. through an application program interface (API) provided by the central management server 400.

The malfunction warning state may refer to a state in which a sign of a malfunction of the elevator is detected and a corresponding inspection part has to be inspected carefully. The malfunction alert state may refer to a state in which a sign of a malfunction of the elevator is detected at a higher level than the malfunction warning state and the corresponding inspection part has to be inspected with more attention. For example, when an abnormality signal is detected in the operational state signal of the elevator, the central management server 400 may determine the malfunction warning state or malfunction alert state by considering a signal value and the number of occurrences of the abnormality signal. Of course, when a fault signal is detected in the operational state signal of the elevator, the central management server 400 generates a separate malfunction occurrence signal and responds to the fault signal through a malfunction handling process.

Meanwhile, for example, the malfunction warning state may be an issue that has to be checked selectively when a maintenance worker is dispatched for reasons, such as inspection. The malfunction alert state may be an issue that has to be checked requisitely when a maintenance worker is dispatched for reasons, such as inspection. Of course, if a malfunction is detected, a notification that a dispatch is absolutely necessary may be displayed on the maintenance terminal 500.

In the present disclosure, when an abnormality signal other than a fault signal is detected in the operational state signal of the elevator, the malfunction warning and malfunction alert states may be determined based thereon. The determination result may be provided to the maintenance terminal 500, so that the maintenance worker may be guided to check the inspection items of the malfunction warning and malfunction alert states when visiting the elevator site. Accordingly, the occurrence of a malfunction in the elevator may be prevented in advance.

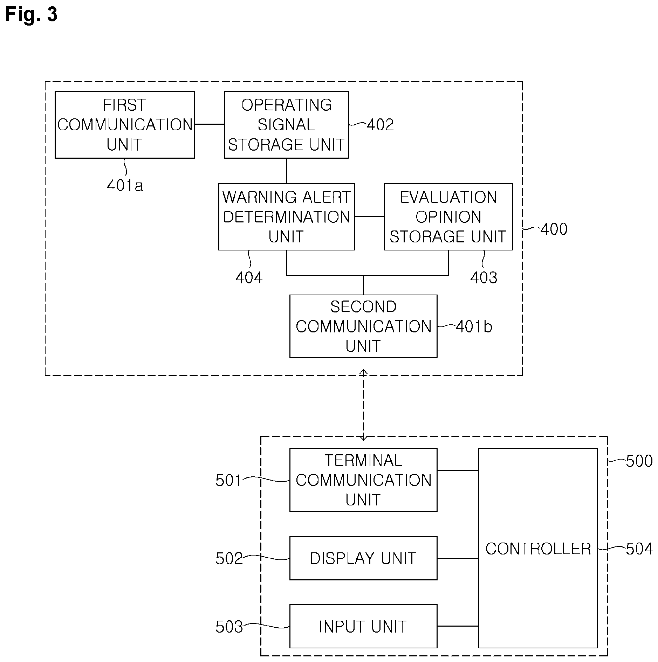

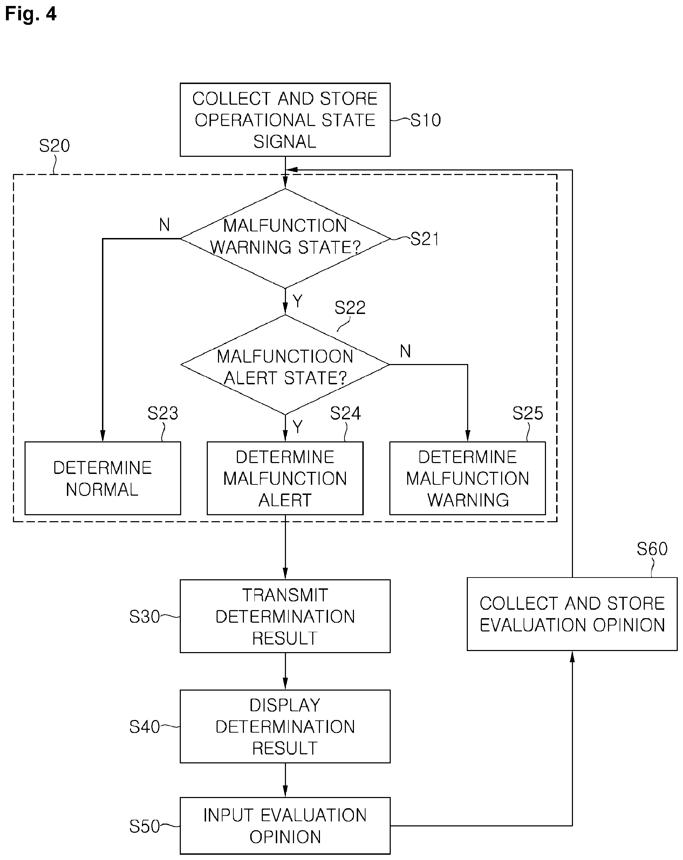

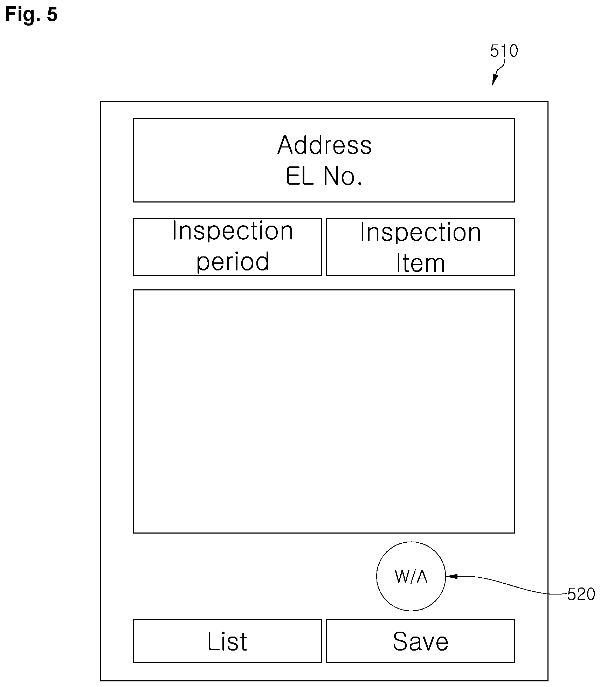

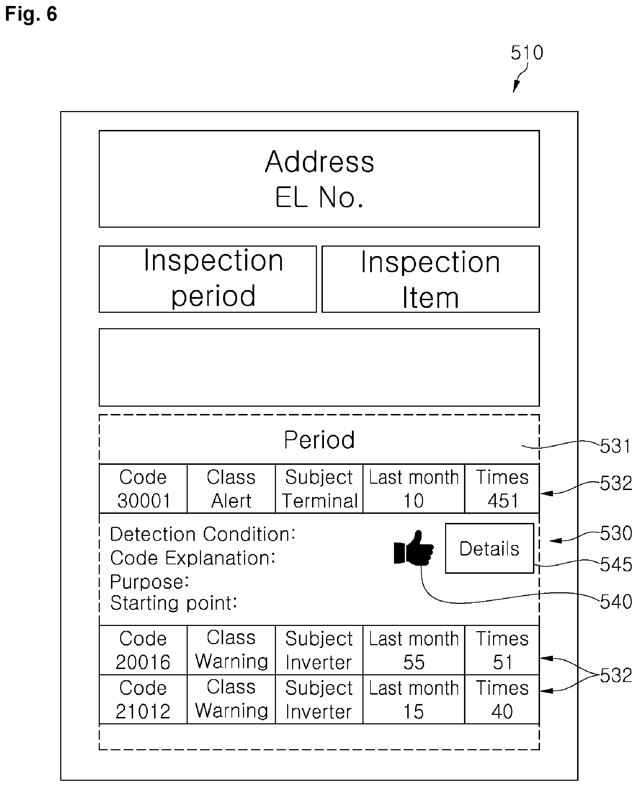

FIG. 3 is a block diagram functionally illustrating a configuration of a central management server and a maintenance terminal of an elevator maintenance system according to an embodiment of the present disclosure. FIG. 4 is a flowchart illustrating a process of determining malfunction warning and malfunction alert states of an elevator maintenance system according to an embodiment of the present disclosure. FIG. 5 is a view illustrating a regular inspection writing screen and a warning alert confirmation button displayed on a maintenance terminal according to an embodiment of the present disclosure. FIG. 6 is a view illustrating a warning alert display screen and an evaluation input section displayed on a maintenance terminal according to an embodiment of the present disclosure.

The elevator maintenance system according to an embodiment of the present disclosure may include the maintenance terminal 500 and the central management server 400.

The central management server 400 may include a first communication unit 401a, an operating signal storage unit 402, a warning alert determination unit 404, and a second communication unit 401b. In addition, the central management server 400 may further include an evaluation opinion storage unit 403.

The first communication unit 401a may communicate with the communication unit 200 of the elevator and may receive in real time an operational state signal recorded in the elevator control panel 100. The operational state signal of the elevator received through the first communication unit 401a may be stored in the operating signal storage unit 402 of the central management server 400. The operational state signal of the elevator may include various operational state signals, such as a speed of the elevator, the number of floors, a door operational state, and detection signals of various sensors.

The operating signal storage unit 402 may classify and store the operational state signal information of the elevator collected from the elevator control panel 100 through the first communication unit 401a by inspection items of the elevator. Various inspection items of the elevator may be previously set according to the needs of the user, such as a winding machine motor, inverter, main rope, door drive motor, and landing sensor. The operating signal storage unit 402 may separately extract and classify signals related to these inspection items from among the operational state signals of the elevator collected from the elevator control panel 100 and store them by inspection items.

The warning alert determination unit 404 may compare the operational state signal information for each inspection item stored in the operating signal storage unit 402 with a first determination reference and a second determination reference set for each inspection item to determine the malfunction warning and malfunction alert states. The determination result by the warning alert determination unit 404 may be transmitted to the maintenance terminal 500 through the second communication unit 501b.

The second communication unit 501b may communicate with the maintenance terminal 500 and receive an information request signal from the maintenance terminal 500. The second communication unit 501b may transmit the determination result by the warning alert determination unit 404 to the maintenance terminal 500.

The evaluation opinion storage unit 403 may store the evaluation opinion information input by the maintenance worker through the maintenance terminal 500 for each inspection item regarding the determination result of the warning alert determination unit 404. The warning alert determination unit 404 reflects the evaluation opinion information in the process of determining the malfunction warning and malfunction alert states.

In detail, as shown in FIG. 4, first, the central management server 400 may collect and store the elevator operational state signal from the elevator control panel 100 (S10). The central management server 400 may analyze the stored operational state signal to determine the malfunction warning and malfunction alert states for each inspection item of the elevator (S20). The process of determining the malfunction warning and malfunction alert states (S20) includes operations S21 to S25. First, the central management server 400 may analyze the operational state signal for each inspection item of the elevator to determine whether a corresponding inspection item is in the malfunction warning state (S21). If the corresponding inspection item is not in the malfunction warning state, the central management server 400 may determine that the corresponding inspection item is normal (S23). If the corresponding inspection item is in the malfunction warning state, the central management server 400 may analyze the corresponding operational state signal and determine whether the corresponding inspection item is in the malfunction warning state (S22). If the corresponding inspection item is not in the malfunction warning state, the central management server 400 may determine that the corresponding inspection item is in the malfunction warning state (S25), and if the corresponding inspection item is in the malfunction alert state, the central management server 400 may determine the malfunction alert state (S24). After determining the malfunction warning and malfunction alert states (S20), the corresponding determination result may be transmitted from the central management server 400 to the maintenance terminal 500 (S30). The maintenance terminal 500 may display the received determination result of the malfunction warning and malfunction alert states (S40).

During the use of the elevator, the operational state signals of the elevator may be continuously collected and stored. In addition, during the process of using the elevator, whenever a new operational state signal is collected and stored, the malfunction warning and malfunction alert states may be determined by the warning alert determination unit 404. The warning alert determination unit 404 has a programmed determination method and may be included in the control panel and maintenance terminal in addition to the central management server.

Referring to the determination process (S20) of the warning alert determination unit 404 in more detail, the warning alert determination unit 404 may compare the operational state signal information for each inspection item stored in the operating signal storage unit 402 with the first determination reference set for each inspection item to determine whether the corresponding inspection item is in the malfunction warning state (S21). If the corresponding inspection item is in the malfunction warning state, the warning alert determination unit 404 may compare the corresponding operational state signal information with the second determination reference set for each inspection item to determine whether the corresponding inspection item is in the malfunction warning state (S22).

The first determination reference may include a first threshold reference that sets an allowable range for the signal value of the operational state signal for each inspection item and a first threshold count reference that sets an allowable range for the number of times the signal value of the operational state signal for each inspection item deviates from the first threshold reference. The warning alert determination unit 404 may compare the operational state signal information for each inspection item stored in the operating signal storage unit 402 with the first threshold count reference to determine whether each inspection item is in the malfunction warning state. That is, if the number of times the signal value of the operational state signal deviates from the first threshold reference exceeds the first threshold count reference, the warning alert determination unit 404 may determine a corresponding inspection item is in the malfunction warning state.

The second determination reference may include a second threshold reference that sets an allowable range for the signal value of the operational state signal for each inspection item and a second threshold count reference that sets an allowable range for the number of times the signal value of the operational state signal for each inspection item deviates from the second threshold reference. The warning alert determination unit 404 may compare the operational state signal information for each inspection item stored in the operating signal storage unit 402 with the second threshold count reference to determine whether each inspection item is in the malfunction alert state. That is, if the number of times the signal value of the operational state signal exceeds the second threshold count reference, the warning alert determination unit 404 may determine a corresponding inspection item is in the malfunction alert state.

At least one of the second threshold reference and the second threshold count reference may be formed to have a larger allowable range than the first threshold reference and the first threshold count reference.

For example, if a current value of up to 100A for a door drive motor is set to a normal range and a current value of 200A or more is set to a malfunction range, a current value of 0A to 100A of the door drive motor may correspond to a normality signal, a current value of 200A or more may correspond to a fault signal, and a current value of 101A to 200A may correspond to an abnormality signal. In this case, a first threshold for determining the malfunction warning state may be set to 100A, and a first threshold count may be set to, for example, 300 times. A second threshold for determining the malfunction alert state may be set to 100A, which is the same as the first threshold. A second threshold count may be set to 400 times, which is larger than the first threshold count. Of course, the second threshold may be set to 150A, which is greater than the first threshold, and the second threshold count may be set to 300, which is the same as the first threshold count. Alternatively, the second threshold may be set to 150A, which is greater than the first threshold, and the second threshold count may be set to 400, which is greater than the first threshold count. These threshold reference and threshold count reference are examples and may be set to vary according to the user's needs.

In this manner, with the first determination reference and the second determination reference set, if the number of times the current value of the door drive motor is 101A to 200A is detected 300 or more times, the warning alert determination unit 404 may determine that the door drive motor is in a malfunction warning state. Thereafter, as the usage time increases, if the number of times the current value of the door drive motor is 101A to 200A is detected 400 or more times, the warning alert determination unit 404 may determine that the door drive motor is in the malfunction alert state. At this time, a time range for the number of times the current value of the door drive motor is 101A to 200A may be set as a time range from a new installation date for the corresponding inspection item to the present, but may be set as a range within a certain period from the present, for example, a period of up to 30 days from the present. That is, the warning alert determination unit 404 may determine the malfunction warning and malfunction alert states by limiting the number of times the signal value of the operational state signal for the elevator exceeds the first threshold standard or the second threshold standard to the number of times detected within a preset designated period.

In the above case, the door drive motor may be determined to have a malfunction sign because it is not a malfunction but an abnormality signal that exceeds the normal range has occurred repeatedly. In addition, the central management server 400 may determine the malfunction warning state or the malfunction alert state through the first determination reference and the second determination reference and notify the maintenance worker of a malfunction sign state. Accordingly, even if a malfunction does not occur, the central management server 400 may detect a sign of malfunction and induce the maintenance worker to inspect the corresponding inspection item. In addition, a malfunction may be prevented by completing inspection measures before a malfunction occurs.

Meanwhile, the central management server 400 may include the evaluation opinion storage unit 403 as described above. The warning alert determination unit 404 may determine the malfunction warning and malfunction alert states by reflecting evaluation opinion information of the maintenance worker stored in the evaluation opinion storage unit 403. At this time, the warning alert determination unit 404 may newly set the first determination reference and the second determination reference by reflecting the evaluation opinion information. In addition, the warning alert determination unit 404 may determine the malfunction warning and malfunction alert states based on the newly set determination reference.

In more detail, first, the maintenance terminal 500 may include a terminal communication unit 501, a display unit 502, an input unit 503, and a controller 504 as shown in FIG. 3.

The input unit 503 is formed on the maintenance terminal 500 so that the maintenance worker may input and operate it, and the input unit 503 may be formed according to a touch operation method through a touch panel or in various forms, such as a separate physical button.

The display unit 502 may display elevator operational state signal information, malfunction warning and malfunction alert determination result information, etc. transmitted from the central management server 400 and may be formed as a display screen formed on the maintenance terminal.

The terminal communication unit 501 communicates with the second communication unit 401b of the central management server 400 and may transmit an information request signal, etc. to the central management server 400 or receive malfunction warning and malfunction alert determination result information, etc. from the central management server 400.

The controller 504 may control the operation of the input unit 503, the display unit 502, and the terminal communication unit 501 of the maintenance terminal 500. When the maintenance worker generates an input signal through the input unit 503, the controller 504 may control the operation to transmit an information request signal corresponding to the input signal to the central management server 400 through the terminal communication unit 501. According to the transmission of this information request signal, the malfunction warning and malfunction alert determination result information, etc., may be received from the central management server 400 through the terminal communication unit 501. The controller 504 may control the operation to display malfunction warning and malfunction alert determination result information, etc., received from the central management server 400 on the display unit 502.

The display unit 502 of the maintenance terminal 500 may include a warning alert display screen 530 that displays the determination result of the malfunction warning and malfunction alert states for each inspection item of the elevator, as shown in FIG. 6. The determination result of the malfunction warning and malfunction alert states transmitted from the central management server 400 may be displayed on the warning alert display screen 530.

The display unit 502 of the maintenance terminal 500 may include a regular inspection writing screen 510 through which a regular inspection process for the elevator may be input, as shown in FIG. 5. The elevator has to undergo a regular inspection process according to management regulations, and the maintenance terminal 500 may display the regular inspection writing screen 510 so that an inspection result may be input during the regular inspection process.

The regular inspection writing screen 510 may include a warning alert confirmation button 520 that may confirm the determination result of the malfunction warning and malfunction alert states. When a touch operation of the warning alert confirmation button 520 is performed, the warning alert display screen 530 may be controlled to be displayed. The warning alert display screen 530 may be displayed in an overlapping manner on the regular inspection writing screen 510 as shown in FIG. 6, but may also be displayed in a separate screen-changed form.

In an embodiment, the regular inspection writing screen 510 may display an elevator number, address, inspection period, inspection item, inspection contents, etc.

The warning alert display screen 530 may have a plurality of inspection item display regions 532 that display the malfunction warning and malfunction alert states for each inspection item. Each inspection item display region 532 may display information on the code, determination result (classification), diagnosis region (monitoring panel, inverter, etc.), occurrence count, and previous month occurrence count for each inspection item. In addition, a detection period display region 531 may be formed to display information on a detection period for determining the corresponding malfunction warning and malfunction alert states.

An evaluation input section 540 may be formed on the warning alert display screen 530 in which the maintenance worker may input an evaluation opinion on the determination result of the malfunction warning and malfunction alert states displayed for each inspection item of the elevator. The evaluation input section 540 may be formed for each inspection item display region 532. When the inspection item display region 532 is touched, detailed information (a detection condition, code description, purpose, occurrence start time, etc.) corresponding to the corresponding inspection item display region 532 may be displayed, and at the same time, the evaluation input section 540 for the determination result of the corresponding inspection item may be displayed. The warning alert display screen 530 may include a detail button 545. Pressing the detail button 545 may show related detailed information, for example, expected cause (over rated load, increased mechanical interference, error occurrence, parameter error, etc.).

The evaluation input section 540 is for inputting the evaluation opinion of the maintenance worker and may be formed in the form of a button that may be entered through a touch operation as shown in FIG. 6. For example, it may be formed in the form of an "agree" button that is operated by touch when agreeing with the determination result of the central management server 400 and a "disagree" button that is operated by touch when disagreeing with the determination result of the central management server 400. In addition, for example, the evaluation input section 540 may be formed to input whether a malfunction has occurred or not and whether an actual on-site state is a warning state or an alert state.

In this manner, by forming the warning alert confirmation button 520 on the regular inspection writing screen 510, the maintenance worker may be guided to check the malfunction warning and malfunction alert states of the corresponding elevator through the warning alert confirmation button 520 during the regular inspection process. At this time, if the determination result of the central management server 400 is a malfunction warning or malfunction alert state, the warning confirmation button 520 may be displayed in a different form, such as by displaying a different color compared to the normal state, so that the maintenance worker may more easily identify the malfunction warning or malfunction alert state.

In addition, the warning alert display screen 530 may be displayed on the regular inspection writing screen 510. Accordingly, the maintenance worker may check the malfunction warning and malfunction alert states of the elevator during the regular inspection process. In particular, the maintenance worker may directly inspect the inspection items in the malfunction warning and malfunction alert states on-site to check whether there is any sign of a malfunction. Through this confirmation process, it may be evaluated whether the malfunction warning and malfunction alert state determination result of the central management server 400 is appropriate or inappropriate. The maintenance worker may input an evaluation opinion through the evaluation input section 540 formed with the "agree/disagree" button as described above, depending on whether he or she agrees with the determination result.

In this manner, the determination reference for the malfunction warning and malfunction alert states of the central management server 400 may be newly updated through the evaluation opinion entered by the maintenance worker, and by repeating this process, the determination result for the malfunction warning and malfunction alert states of the central management server 400 may become more accurate. That is, if there are many "disagree" opinions in the evaluation opinions of the maintenance worker, the central management server 400 may newly change the first determination reference and the second determination reference to derive a new determination result. If the "disagree" opinions decreases and the "agree" opinions increases in the evaluation opinions of the new determination result, it may mean that the accuracy of the evaluation result of the central management server 400 has improved. Therefore, by newly adjusting the determination reference to reflect the evaluation opinions of the maintenance worker, the accuracy of the determination result for the malfunction warning and malfunction alert states may be improved.

The warning alert display screen 530 shown in FIG. 6 may be used in the process of the maintenance worker entering the evaluation opinions for the malfunction warning and malfunction alert states after the regular inspection process as described above. Although not shown, a separate warning alert display screen (not shown) may be displayed on the maintenance terminal even before the maintenance worker goes on site for the regular inspection. Before going on the site for elevator inspection, the maintenance worker may check the malfunction warning and malfunction alert states on the malfunction warning display screen 530 displayed on the maintenance terminal to recognize the frequency of occurrence of problems at the site, the characteristics of the site, etc.

The reason why the "disagree" button is formed in addition to the "agree" button in the evaluation input section 540 is to filter out information that does not match the actual site situation in the determination result of the malfunction warning and malfunction alert states. If there is only the "agree" button, it may be difficult to check information when the information before dispatch and the information after dispatch do not match from the maintenance worker.

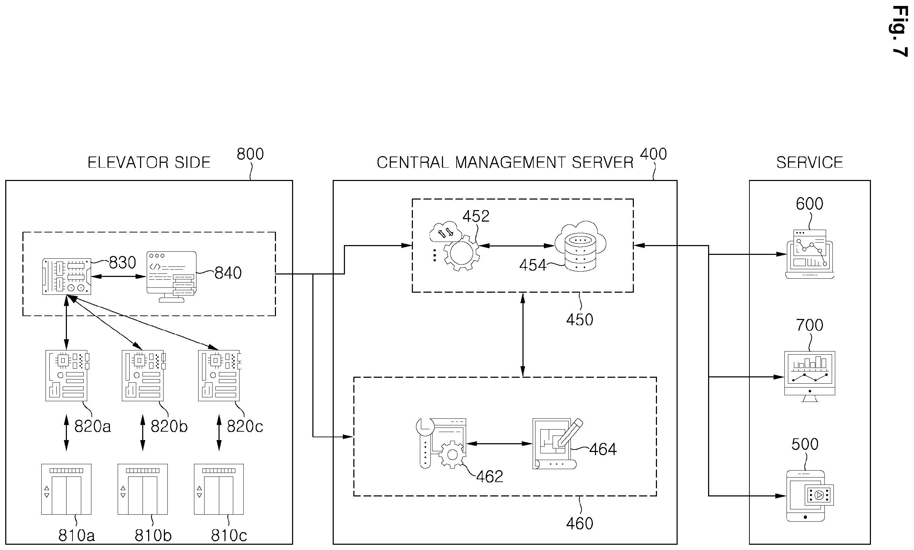

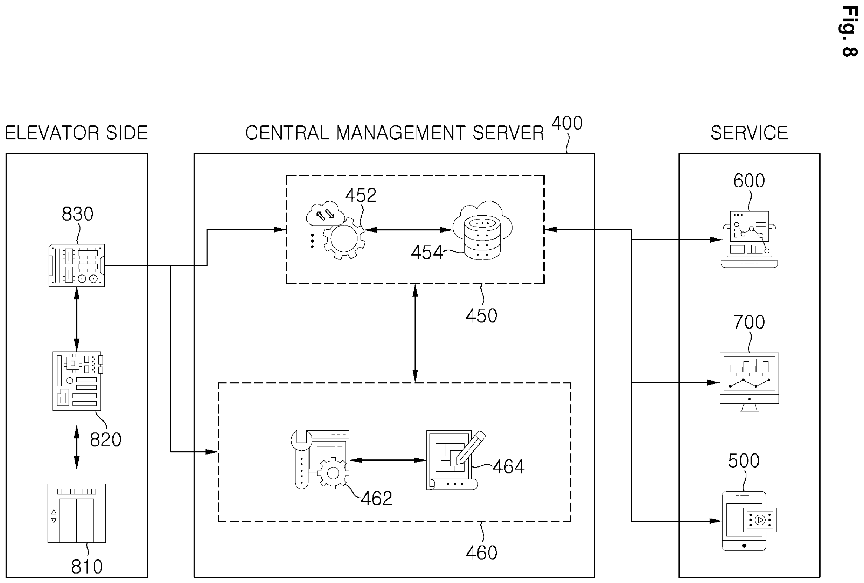

FIG. 7 is a block diagram illustrating an example of an elevator maintenance system according to an embodiment of the present disclosure. FIG. 8 is a block diagram illustrating an example of an elevator maintenance system according to an embodiment of the present disclosure. Referring to FIGS. 7 and 8, the elevator maintenance system includes an elevator-side 800 component, a central management server 400-side component, and a service-side component. The elevator side 800 of FIG. 7 is a monitoring panel type that manages a plurality of elevators, and the elevator side 800 of FIG. 8 illustrates a standalone type. The same reference numerals are given to the same components. In an embodiment, the elevator side 800 may include a building in which an elevator is installed or a set of buildings in which an elevator is installed.

Referring to FIG. 7, the elevator side 800 includes a plurality of elevators 810a, 810b, and 810c. Corresponding control panels 820a, 820b, and 820c are connected to the elevator 810a, 810b, and 810c, respectively. Each of the control panels 820a, 820b, and 820c is connected to a terminal 830. The terminal 830 is managed by a monitoring panel program 840. In an embodiment, the terminal 830 and the monitoring panel program 840 may be referred to as a monitoring panel.

The central management server 400 includes a warning/alert code management unit 450 and a server management unit 460. The service side includes a maintenance terminal 500, a customer portal 600, and a remote management system 700.

Hereinafter, layers on the elevator side is defined as higher layers in the order of the elevators 810a, 810b, and 810c - control panels 820a, 820b, and 820c - terminal 830 - monitoring panel program 840. In addition, the warning/alert code management unit 450 of the central management server 400 that receives a code transmitted by the monitoring panel program 840 is defined as a higher layer of the monitoring panel program 840.

In an embodiment, each of the mechanical and electronic components (e.g., motors, doors, inverters, door inverters, etc.), the control panels 820a, 820b, and 820c, and the terminals 830 included in the elevators 810a, 810b, and 810c may generate a code (W/A code) (which may be included in the aforementioned operational state signal) indicating an abnormality signal and transmit the same to a component of a higher layer. At this time, the W/A code may be transmitted in real time or transmitted at regular intervals. If the W/A code is transmitted at regular intervals, the number of occurrences and the time of occurrence may be transmitted together. That is, each of the mechanical and electronic components included in the elevator 810a, 810b, and 810c may transmit the W/A code to the corresponding control panels 820a, 820b, and 820c, the control panels 820a, 820b, and 820c may transmit the W/A code to the terminal 830, the terminal 830 may transmit the W/A code to the monitoring panel program 840, and the monitoring panel program 840 may transmit the W/A code to the warning/alert code management unit 450 of the central management server 400. The components (e.g., the control panels 820a, 820b, and 820c) of the higher layer may relay the W/A code received from the components (e.g., the elevators 810a, 810b, and 810c) of a lower layer to the component (e.g., the terminal 830) of a higher layer. Accordingly, the warning/alert code management unit 450 may collect the W/A code from each of the elevators 810a, 810b, and 810c, the control panels 820a, 820b, and 820c, the terminal 830, and the monitoring panel program 840. Each component of the elevator side 800 may be configured to store a determination reference for generating W/A codes.

In addition, various operational state signals including a speed, floor number, door operational state, button operational state, and operate panel board (OPB) state of the aforementioned elevator, detection signals of various sensors, etc. may be relayed to the central management server 400 through the control panels 820a, 820b, and 820c, the terminal 830, and the monitoring panel program 840. The central management server 400 may generate the W/A code based on the various collected operational state signals. The central management server 400 may generate the W/A code (e.g., a code starting with 5) in which a diagnosis subject is the central management server 400 based on a pre-selected reference, for example, based on a period of time that a specific situation has been maintained, the number of occurrences, etc.

The W/A code and a corresponding description thereof may be referred to in the following Table 1.

**[Table 1]**

| W/A code | Problem | Diagnosis subject | Starting time |
|---|---|---|---|
| 20016 | Landing distance problem | Inverter | 23-03-24 17:55:34 |
| 21011 | Door speed deviation | Inverter | 23-03-24 17:55:34 |
| 30001 | Inverter torque current problem | Terminal | 23-03-24 17:55:34 |
| 40012 | Monitoring panel error | Monitoring panel | 23-03-24 17:55:34 |
| 50072 | OPB board communication state | Central management server | 23-03-24 17:55:34 |
| 50150 | Elevator call button problem | Central management server | 23-03-24 17:55:34 |

The codes shown in Table 1 are an example and may be set by the user to classify desired information. In an embodiment, the W/A code may include a code representing a diagnosis subject and a code configured to represent diagnostic contents (which may include a problem, a cause, etc.). The diagnosis subject may be a generating subject that generates the W/A code. For example, in the W/A code 20016 in the first row of Table 1, for example, 2 is a code representing an inverter, which is a diagnosis subject, and 16 is a code representing a problem in a landing distance. In more detail, when a corresponding warning situation occurs, the inverter may transmit a signal to the control panel through a preset bit in an inverter-control panel communication protocol. The warning situation (e.g., a reference of an abnormality signal) may be pre-selected and may be set and changed by an administrator. For example, the inverter, which is an elevator component, may generate a W/A code based on a pre-selected reference. The W/A code may be detected by the terminal and transmitted to the central management server. In more detail, when an abnormal condition of the inverter is detected, a W/A code is generated, and this information may be stored as a W/A code using a specific memory in an (electrically) connected control panel. The terminal detects whether a W/A code occurs using a change value of the code value, and when a W/A code occurs, the terminal transmits the value to a server.

In an embodiment, the code in which the inverter is a detection subject may include codes related to speed deviation, torque current, motor voltage, DC link, initial value, inverter torque analysis in a constant speed section, landing distance, elevator car load, inverter torque, door speed deviation, door overload current, door encoder, door current offset, door communication state, etc.

In an embodiment, as described below, a warning signal and an alert signal may be generated according to a W/A code and a pre-selected reference. Alternatively, as shown in Table 1, information on the warning signal and the alert signal may be included in the W/A code from the beginning. For example, 20016 and 21011 are both W/A codes generated by the inverter and both have the same detection subject (here, inverter). A difference between 20XXX and 21XXX is that they refer to the same detection subject, the inverter, but may be expressed as 20 in the case of the warning signal and 21 in the case of the alert signal. In other words, even for the same diagnosis subject, a W/A code corresponding to an alert may be generated depending on the degree of abnormality in the operational state. The degree, criteria, etc. of this W/A code may be selected in advance.

As another example, in the third row of Table 1, for example, in the case of W/A code 30001, the terminal checks an inverter torque current feedback signal (hereinafter, current Fbk) in the section in which the elevator moves at a constant speed, and when a time for which the current Fbk exceeds 100% is equal to or longer than a certain time (e.g., 100 ms), the terminal generates 30001 and sends it to the server. The reference for generating and transmitting the W/A code may be pre-selected and may be set and changed by the administrator.

In an embodiment, the code in which the terminal is a diagnosis subject may include a code regarding a communication state.

As another example, in the sixth row of Table 1, for example, in the case of W/A code 50150, the central management server 400 may generate W/A code 50150 based on the operational state signal. In more detail, the central management server 400 may receive an hall button state abnormality signal (e.g., 150), which is one of the signals indicating the operational state, through the control panels 820a, 820b, and 820c, the terminal 830, and the monitoring panel program 840, and the central management server 400 may generate W/A code 50150 in response to determining that the accumulated amount of the hall button state abnormality signal is repeated more than a predetermined number of times. In an embodiment, the signal indicating the operational state may be configured not to indicate a generating subject or a diagnosis subject. That is, the signal indicating the operational state may include a hall button state abnormality signal, a door error signal, a communication state abnormality signal, etc. and may be configured to indicate only an abnormal state of a component constituting the elevator.

In an embodiment, the code in which the central management server 400 is a diagnosis subject may include codes related to an OPB board communication state, brake-related information, door error, hall button, landing device, rope extension amount, and a multi-beam sensor-related information.

For example, 2XXXXX and 5XXXX are compared and described as follows. In response to the inverter being overloaded or operating outside a preset reference, the inverter detects an abnormality and generates a W/A code corresponding to 2XXXX. The generated W/A code is detected and stored by the control panel. The control panel transmits the 2XXXX W/A code to the central management server through the terminal.

5XXXXX is a W/A code generated by the central management server. For example, referring to 50150, the central management server continuously receives the operational state of the elevator 150 (e.g., a problem of hall call button), and based on pre-selected criteria, the central management server may determine a warning or alert state (even if it is temporarily normalized), and the central management server may generate the W/A code called 50150.

In an embodiment, the control panel may be configured to store the W/A code and abnormal operational state generated from an elevator driving component, such as an inverter, etc. The terminal may be configured to detect the information stored in the control panel and transmit it to the central management server.

In this manner, the central management server 400 may store the W/A code relayed from a lower layer and generate and store the W/A code based on the operational state signal.

Similarly, the terminal 830 and the monitoring panel program 840 may also generate the W/A code based on pre-selected determination reference based on the received operational state signal and transmit the W/A code to the higher layer.

The present disclosure may include a case in which a subject (diagnosis subject) that generates a W/A code and the diagnosis object are the same and a case in which the diagnosis subject and the diagnosis object are different.

The aforementioned W/A codes 20016 and 30001 are codes in which a code representing a diagnosis subject and a code representing a problem are combined. Alternatively, the code representing the diagnosis subject and the code representing the problem may be generated and transmitted separately. That is, the present disclosure includes contents in which a component constituting the elevator side 800 transmits codes (or an equivalent thereof) configured to represent the diagnosis subject and the problem to a component of a higher layer. Here, the problem may be configured to indicate at least one of code contents, a cause, and a code description.

In an embodiment, when the diagnosis subject transmits a W/A code, the diagnosis subject may transmit a location (e.g., address, unit information) together. When transmitting the W/A code, the diagnosis subject may transmit at least one of the occurrence count and starting time together.

Referring to FIG. 8, the elevator side 800 includes an elevator 810. The elevator 810 is connected to a control panel 820. The control panel 820 is connected to a terminal 830. The terminal 830 is connected to the warning/alert code management unit 450 of the central management server 400 and transmits W/A codes from components of the elevator 810, the control panel 820, and the terminal 830 to the warning/alert code management unit 450. The control panel 820 and the terminal 830 of FIG. 8 correspond to the control panels 820a, 820b, and 820c and the terminal 830 illustrated in FIG. 7, respectively.

In an embodiment, the warning/alert code management unit 450 includes a W/A code collecting unit 452 and a W/A code database 454. The W/A code collecting unit 452 is configured to receive a W/A code from the elevator side 800. Various protocols may be used, and for example, the W/A code collecting unit 452 receives a W/A code in a JSON format from the elevator side 800. In an embodiment, the W/A code collecting unit 452 may include an API.

The W/A code database 454 is configured to store the collected W/A code. The W/A code database 454 is configured to store the W/A code generated by the central management server 400. The W/A code database 454 may store information for interpreting the W/A code. For example, the information for interpreting the W/A code may store information on which diagnosis subject and which problem the elements constituting the W/A code indicate, for example. The W/A code database 454 may store the W/A code and a diagnosis subject, diagnostic object, location, problem, problem cause, starting time, occurrence count, etc. related to the W/A code. The W/A code database 454 may store the W/A code and a detection condition, a problem, a problem cause, a confirmation item, a registration modification time, etc. related to the W/A code. The W/A code database 454 may include warning/alert determination reference including a threshold, a threshold count, and a time range. The W/A code database 454 may match and store a W/A code, an address related to the W/A code, a building name or number, a line, an starting time, and a diagnostic object. The W/A code database 454 may store information to allow creation of the table of Table 1. The W/A code database 454 may store a project number, a site name, a building and line (B/D and line), a W/A code, a starting time, and a detection object and may store information to allow creation of a table of Table 2 below. Although not shown, the starting time may include hours, minutes, and seconds.

**[Table 2]**

| Project No. | Site Name | B/L and Line | W/A code | Starting time | Detection Object |
|---|---|---|---|---|---|
| 185303L08 | Dreamlan d | 101-1 | 20013 | 2023-03-24 | Inverter |
| 185867L14 | Seoul land | 30-4 | 30001 | 2023-03-24 | Terminal |

In an embodiment, the W/A code database 454 may perform a function of the operating signal storage unit 402 described above. In an embodiment, the server management unit 460 may include a malfunction handling unit 462 and a determination unit 464. The malfunction handling unit 462 may be configured to receive a malfunction code (which may correspond to the fault signal described above) from the elevator side 800. The malfunction handling unit 462 may collect and detect a malfunction code from the elevator side 800 in real time. The malfunction handling unit 462 may be configured to analyze the malfunction code and generate a new malfunction code.

In an embodiment, the determination unit 464 may receive the W/A code and determine which diagnosis subject and problem the corresponding W/A code represents. In addition, the determination unit 464 may receive the W/A code and determine the cause of occurrence corresponding to the W/A code. The determination unit 464 may generate the W/A code based on the operational state signal.

In an embodiment, the determination unit 464 may perform the function of the aforementioned warning alert determination unit 404.

In an embodiment, the determination unit 464 may be configured to generate a new code based on the W/A code stored in the W/A code database 454 and the determination reference or to generate at least one of a warning signal, an alert signal, and a fault signal. The determination unit 464 may transmit the generated warning signal, alert signal, and fault signal to at least one of the maintenance terminal 500, the customer portal 600, and the remote management system 700. In an embodiment, the warning signal, alert signal, and fault signal may include a signal that sets a state for an elevator inspection item.

The determination reference may include at least one of a threshold count and a time range. In an embodiment, the determination reference for the warning signal may include at least one of a warning signal threshold count and a warning signal time range. The determination reference for the warning signal may include at least one of the warning signal threshold count and the warning signal time range. The determination reference for the fault signal may include at least one of the fault signal threshold count and the fault signal time range. The determination reference may be set by the administrator.

For example, if the number of occurrences of a certain specific W/A code is greater than a warning signal threshold count and less than an alert signal threshold count, the determination unit 464 may generate a warning signal and match the warning signal to the corresponding W/A code. If the number of occurrences of a certain specific W/A code is greater than the warning signal threshold count and less than the fault signal threshold count, the determination unit 464 may generate an alert signal and match the alert signal to the corresponding W/A code. If the number of occurrences of a certain specific W/A code is greater than the fault signal threshold count, the determination unit 464 may generate a fault signal and match the fault signal to the corresponding W/A code. That is, the number of times the corresponding W/A code has occurred and, accordingly, whether a current state is a warning state, an alert state, or a malfunction state may be notified to at least one of the maintenance terminal 500, the customer portal 600, and the remote management system 700.

In addition, if the number of occurrences of a specific W/A code within a preset time range (a warning signal time range) is greater than or equal to the warning signal threshold count and less than or equal to the alert signal threshold count, the determination unit 464 may generate an alert signal. If the number of occurrences of a specific W/A code within a preset time range (an alert signal time range) is greater than or equal to the alert signal threshold count and less than or equal to the fault signal threshold count, the determination unit 464 may generate an alert signal. If the number of occurrences of a specific W/A code within a preset time range (a fault signal time range) is greater than or equal to a fault signal threshold count, the determination unit 464 may generate a fault signal. The preset time ranges (the warning signal time range, the alert signal time range, and the fault signal time range) may be set by the administrator as 1 week, 2 weeks, 3 weeks, 4 weeks, 1 month, etc.

In an embodiment, the determination reference for generating at least one signal among the warning signal, the alert signal, and the fault signal may include the number of occurrences in a second pre-selected section compared to the number of occurrences in a first pre-selected section. For example, the determination unit 464 may generate at least one signal among the warning signal, the alert signal, and the fault signal by comparing the number of occurrences of a specific W/A code that occurred on any day in a section from January 1 to January 31 with the number of occurrences of a specific W/A code that occurred in a section from December 1 to December 31. Here, the section from January 1 to January 31 may be the first pre-selected section, and the section from December 1 to December 31 may be the second pre-selected section.

The number of occurrences in the second pre-selected section compared to the number of occurrences in the first pre-selected section may be set by the administrator. For example, the determination unit 464 may generate a warning signal in response to determining that the number of occurrences in the first pre-selected section is 150% of the number of occurrences in the second pre-selected section, an alert signal in response to determining that the number of occurrences is 200%, and a fault signal in response to determining that the number of occurrences is 250%. That is, assuming that a specific W/A code occurs 30 times in the second pre-selected section (e.g., from December 1 to December 31), the determination unit 464 may generate a warning signal in response to the specific W/A code occurring 45 times on January 15 (any date), an alert signal in response to the specific W/A code occurring 60 times on January 20 (any date), and a fault signal in response to the specific W/A code occurring 75 times on January 28 (any date).

In an embodiment, the number of occurrences in the second pre-selected section compared to the number of occurrences in the first pre-selected section may be the ratio as described above or may be an arithmetically determined value. For example, the determination unit 464 may sequentially generate a warning signal, an alert signal, and a fault signal whenever the number of occurrences in the first pre-selected section increases by 10 times more than the number of occurrences in the second pre-selected section.

It will be understood that the ratio or arithmetic value may be set by the administrator and the determination reference may be determined in other manners.

In an embodiment, the determination unit 464 may be configured to generate and notify a warning signal a predetermined number of times and then generate and notify an alert signal. For example, the determination unit 464 may be configured to notify a warning signal three times and then notify an alert signal once.

In an embodiment, the determination unit 464 may transmit at least one of a W/A code, a classification (one of a warning state, an alert state, and a malfunction state), a diagnosis subject, the number of occurrences in the previous month, the number of occurrences in the current month, and the cause of occurrence to at least one of the maintenance terminal 500, the customer portal 600, and the remote management system 700. The determination unit 464 may transmit data stored in the W/A code database 454 to at least one of the maintenance terminal 500, the customer portal 600, and the remote management system 700.

In this manner, the central management server 400 may be configured to receive a W/A code including a problem and a diagnosis subject from each component of the elevator side 800 and store and manage the same in the W/A code database 454. The central management server 400 may be configured to generate at least one of a warning signal, an alert signal, and a fault signal based on the stored W/A code and the determination reference and transmit the generated signal to at least one of the maintenance terminal 500, the customer portal 600, and the remote management system 700. Accordingly, the central management server 400 may be configured to monitor an operation outside the normal range occurring in elevator components, the control panel, the monitoring panel, etc., generate at least one of a warning signal, an alert signal, and a fault signal based on determination reference, such as the number of operations outside the normal range, and transmit the generated signal to at least one of the maintenance terminal 500, customer portal 600, and remote management system 700.

The customer portal 600 may transmit information received from the central management server 400 to the elevator customer. The customer portal 600 may be configured to provide the user with information on the occurrence of a W/A code and the occurrence details. Through the customer portal 600, the user may access the site and remotely monitor a site state. The customer portal 600 may be configured to provide the user with a detailed description and action details for the W/A code. The customer portal 600 may be configured to provide statistics and action details for the W/A code that occurred during a specific period and a specific month.

The administrator may access the central management server 400 through the remote management system 700. The administrator may access the central management server 400 through the remote management system 700 and manage the W/A code. The administrator may search the occurrence history of the W/A code and the contents stored in the W/A code database 454 through the remote management system 700. The administrator may register or delete the W/A code or change related information including the determination reference through the remote management system 700. The administrator may register and modify information on the W/A code, such as the diagnosis subject, determination reference, detection conditions, description, purpose, occurrence cause, and necessity of confirmation (e.g., whether on-site confirmation is required or whether on-site confirmation is recommended, etc.) through the remote management system 700.

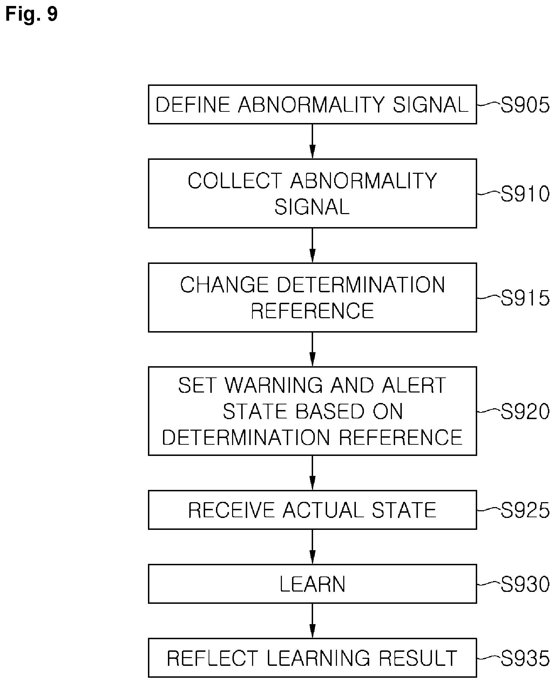

FIGS. 9 to 11 are diagrams illustrating screens displayed on the maintenance terminal 500 according to an embodiment of the present disclosure.

Referring to FIGS. 9 to 11, the display screen 1010 is configured to display the address of each of a plurality of elevators, the elevator number, the building and line number for identifying an elevator, the last maintenance date, and the warning alert confirmation button 1015. The screen displaying each of the corresponding elevator information includes the warning alert confirmation button 1015.

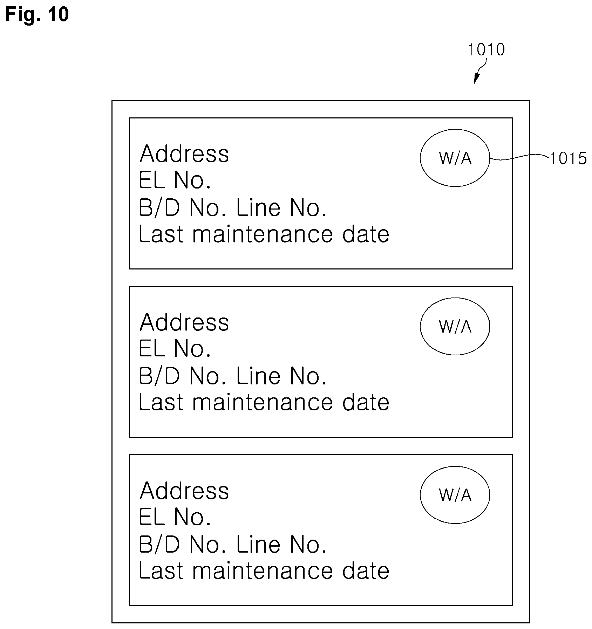

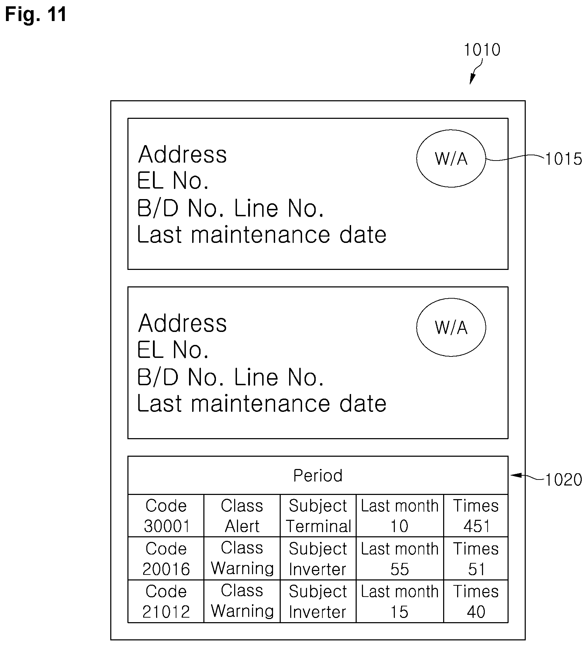

In an embodiment, the warning alert confirmation button 1015 may be activated/deactivated on the elevator screen requiring confirmation. In another embodiment, the warning alert confirmation button 1015 may be displayed only on the elevator screen requiring confirmation. When the user of the maintenance terminal 500 uses the warning alert confirmation button 1015, a screen 1020 showing W/A code information corresponding to the corresponding elevator as shown in FIG. 10 is provided. The display screen 1010 may display a W/A code detection period, W/A code, classification, diagnosis subject, number of occurrences last month, number of occurrences this month, etc. When an item included in the screen 1020 showing W/A code information is used by touching, the corresponding W/A code related information screen 1025 is displayed as shown in FIG. 11. The W/A code related information screen 1025 includes detection conditions, W/A code description, purpose, starting time, and a detail button 1030. When the detail button 1030 is pressed, related detailed information, for example, expected cause (over rated load, increased mechanical interference, error occurrence, parameter error, etc.), may be displayed.

In an embodiment, the central management server 400 may be implemented by a processor, a memory, and a communication unit. The processor may be an application specific integrated circuit (ASIC), a digital signal processor (DSP), a digital signal processing device (DSPD), a programmable logic device (PLD), a field programmable gate array (FPGA), a controller, a micro-controller, a microprocessor, or any other form of processor or controller for performing a function. The communication unit may be a component for the central management server 400 to communicate with other devices, such as the elevator side 800, the maintenance terminal 500, the customer portal 600, and the remote management system 700. The communication unit may be a hardware module, such as a data bus, a network interface card, a network interface chip, and a networking interface port, or a software module, such as a network device driver or a networking program, that transmits/receives data and/or information. The memory may store a plurality of application programs or applications, data that may be read by the processor, and commands. For example, the storage device may include various storage spaces, such as a hard disk drive (HDD), a solid state disk (SSD), a silicon disk drive (SDD), ROM, RAM, EPROM, a flash drive, a hard drive, a cloud using a network, etc.

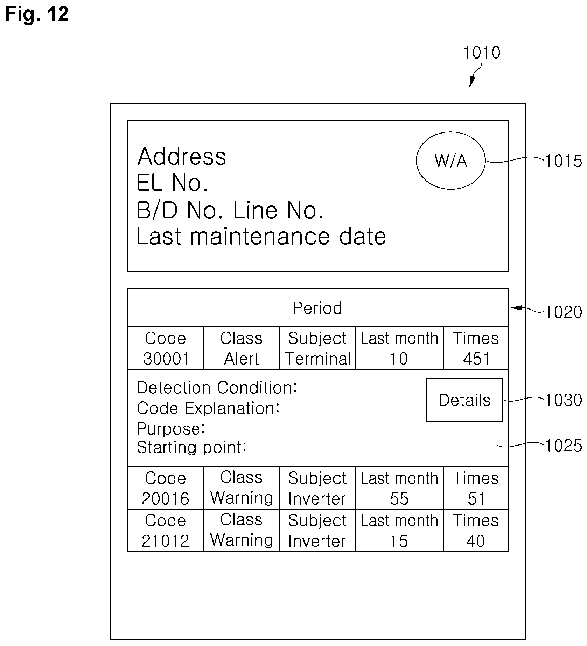

FIG. 12 is a flowchart of a process for teaching a central management server of an elevator maintenance system according to an embodiment of the present disclosure. The method of FIG. 12 may be performed by the central management server 400. It will be understood that the method of FIG. 12 may be performed on a general computing device.

The learning of the present disclosure may be performed using an artificial intelligence (AI) model. That is, the central management server 400 may include an AI model. In the present disclosure, the AI model may refer to a model that trains a learning model including an artificial neural network (ANN) through a large amount of learning data to optimize parameters inside the artificial neural network and participates in the operation of a system (not shown) using the trained learning model. In an embodiment, an AI module (not shown) may be trained through machine reading comprehension (MRC). In an embodiment, the artificial neural network model used in the AI module is at least one or a combination of a convolutional neural network (CNN), a deep neural network (DNN), a recurrent neural network (RNN), a restricted Boltzmann machine (RBM), a deep belief network (DBN), a bidirectional recurrent deep neural network (BRDNN), a variational auto encoder (VAE), or a deep Q-network, but is not limited to the examples described above. The learning method may include rule-based reasoning that generates a service by inferring data satisfying specific rules among input data based on rules between specific data defined by the user and case-based reasoning that matches identical/similar cases based on past cases to solve a problem of a current case, etc. In addition, inference techniques using supervised learning, unsupervised learning, reinforcement learning, neural networks, etc. may be used, but are not limited thereto.

In process S905, an abnormality signal is defined in the central management server 400 or through the central management server 400. The abnormality signal may refer to a signal generated when an operation of a corresponding component is out of the normal range but is not in a complete malfunction state. The abnormality signal may include the W/A code described above. The definition of the abnormality signal may be changed or set by the administrator. If there is no need to change the definition of the established abnormality signal, process S905 may be omitted.

In process S910, the central management server 400 collects an abnormality signal. In an embodiment, the central management server 400 collects a W/A code. The central management server 400 may collect a W/A code, a W/A code occurrence address, an elevator line, a starting time, etc.

In process S915, the determination reference is changed. The determination reference includes reference for generating a warning signal, an alert signal, and a fault signal by the central management server 400 based on the number of occurrences of the W/A code, the starting time range, etc. The determination reference may be changed by the administrator. Alternatively, the central management server 400 may change the determination reference. Since learning may be performed without changing the determination reference, process S915 may be omitted. In an embodiment, the determination reference may be a determination reference described above with reference to FIGS. 7 and 8. If the determination reference is changed in process S915, the state set in process S920 is changed, so that more learning data may be secured.

In process S920, the central management server 400 sets the warning and alert states based on the determination reference. In an embodiment, the central management server 400 may set the normal operational state, the malfunction state, and the abnormal state that is not a malfunction but requires maintenance. The abnormal state may include the warning state and the alert state. For example, the W/A code, the number of occurrences, the occurrence section, and the warning/alert/normal/malfunction states may be matched.

In process S925, the central management server 400 receives an actual state of the components included in the elevator side 800. In an embodiment, the actual state may include the normal operational state, the malfunction state, and the abnormal state that is not a malfunction but requires maintenance. In addition, the abnormal state may include the warning state and the alert state.

In process S930, the central management server 400 matches the set state based on the determination reference set in process S920 to the actual state received in process S925 and trains the AI model using the same as learning data. In an embodiment, the learning data may include W/A code and related information, a state based on determination reference, and an actual state.

In process S935, the learning result is reflected in the AI model.

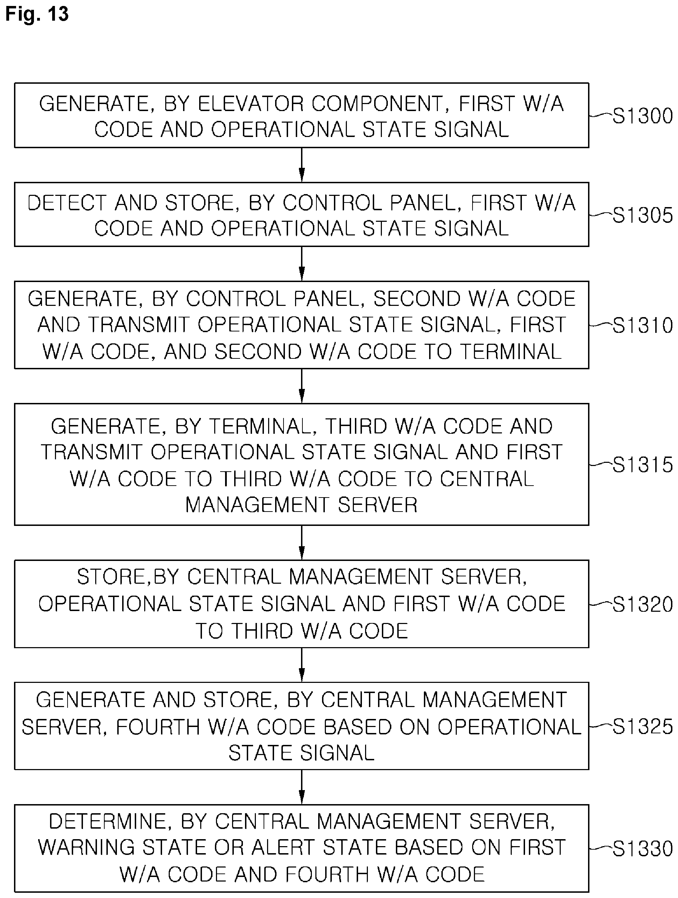

FIG. 13 is an operation flowchart illustrating a process of determining warning and alert states of an elevator maintenance system according to an embodiment of the present disclosure.

In process S1300, elevator components, such as an inverter, a winding motor, a main rope, a door driving motor, etc., generate an operational state signal and a first W/A code. In an embodiment, the elevator component may generate an operational state signal in response to an operation of the elevator component being out of a certain range. For example, an operation of the elevator component being out of a certain range may include a case in which a communication state is determined to be unstable, a case in which the hall button is determined to have been pressed for longer than a certain time, a case in which a door error occurs, a case in which inverter torque is out of a certain range, etc.

In an embodiment, the elevator component may include an inverter, and the inverter may include a controller. The controller included in the inverter may check an operational state of the inverter and generate a W/A code according to preset reference.

In process S1305, the control panel detects and stores an operational state signal and a first W/A code. For example, the control panel may be configured to detect and store the first W/A code generated by the inverter. A sensor may be attached to each component (e.g., a winding motor, a main rope, a door drive motor, etc.) to detect an operational state of components constituting the elevator.

In process S1310, the control panel generates a second W/A code. The control panel transmits the operational state signal, the first W/A code, and the second W/A code to the terminal. The control panel may detect the operation of the elevator component and generate the operational state signal in response to determining that the operation is out of a predetermined reference. The control panel may generate the operational state signal based on the operational state of the control panel component. The control panel may transmit the first W/A code and the operational state signal received from the elevator component and the second W/A code and the operational state signal generated by the control panel to the terminal.

For example, a sensor may be attached to each component (e.g., a winding motor, a main rope, a door drive motor, etc.) to detect the operational state of the components constituting the elevator. The control panel may check the operational state of the elevator component through the sensor, generate and store the second W/A code according to a preset reference, and transmit the second W/A code to a higher entity, e.g., a terminal. In an example, the control panel may include a controller and a memory. The control panel may be configured to generate, store, and transmit the second W/A code under the control of the controller.

In process S1315, the terminal generates a third W/A code and transmits the operational state signal, and the first W/A code to the third W/A code to the central management server. The terminal may generate the third W/A code based on the operational state signals received from the control panel. For example, an inverter torque current value may be received in a rated operation section of the elevator and the third W/A code may be generated based on the inverter torque current value. The terminal may generate the operational state signal based on the operational state of the terminal component. The terminal may transmit the first W/A code, the second W/A code, and the operational state signal received from the control panel and the third W/A code and the operational state signal generated by the terminal to the central management server.

In process S1320, the central management server stores the received operational state signal and the first W/A code to the third W/A code.

In process S1325, the central management server generates and stores a fourth W/A code based on the received operational state signal. For example, if it is determined that the hall button has been pressed for longer than a certain time, the fourth W/A code may be generated in response to determining that the number of generated operation management signals is greater than a predetermined count.

In process S1330, the central management server determines a warning state or an alert state based on the first W/A code and the fourth W/A code. The central management server may further determine the normal state or the malfunction state based on the first W/A code and the fourth W/A code. The determination reference for the warning state or the alert state are described above.

In an embodiment, the W/A code may be configured to include only a problem without indicating a diagnosis subject.

In the present disclosure, the inverter may include an inverter for controlling the speed and torque of the elevator and an inverter for controlling the door.

In the present disclosure, the elevator driving components may include a winding machine, a winding rope, a driving sheave, a gearless motor, a power regeneration device, a brake, a rope brake, an overspeed controller, a hand-trapping prevention device, a multi-beam, a door safety device, a door hanger, etc.

In the present disclosure, when a component malfunctions, an inverter connected thereto may detect a load, a torque abnormality, a current abnormality, etc., and generate a W/A code related to the malfunction of the corresponding component. For example, the inverter may also detect a malfunction of the winding machine.

In the present disclosure, the control panel may monitor a malfunction of a component. For example, the control panel may detect a voltage application amount of the control board, control signal omission, etc., and generate a related W/A code.

In the present disclosure, the terminal may have a larger memory capacity than the control panel. The terminal may monitor data stored in the memory of the control panel and generate a W/A code based on the accumulated data.

The method according to the present disclosure may be implemented as a processor-readable code on a processor-readable recording medium provided in a server, system, equipment, computer, integrated control device, etc. used by a subject. The processor-readable recording medium may include any type of recording devices in which data that may be read by the processor is stored. Examples of processor-readable storage medium include ROM, RAM, CD-ROM, magnetic tape, floppy disks, and optical data storage devices and also includes implementations in the form of carrier waves, e.g., transmission via the Internet. The processor-readable recording medium may be distributed over network-connected computer systems so that processor-readable codes may be stored and executed in a distributed fashion.

The device and method described herein may be implemented using hardware components, software components, and/or a combination thereof. For example, a processing device described in embodiments may be implemented using one or more general-purpose or special purpose computers, such as, for example, a processor, a controller and an arithmetic logic unit, a digital signal processor, a microcomputer, a field programmable array, a programmable logic unit, a microprocessor or any other device capable of responding to and executing instructions. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and/or multiple types of processing elements. For example, a processing device may include multiple processors or a processor and a controller. In addition, different processing configurations are possible, such as parallel processors.

The software may include a computer program, a piece of code, an instruction, or some combination thereof, for independently or collectively instructing or configuring the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. In particular, the software and data may be stored by one or more computer readable recording mediums.

The described embodiments of the present disclosure may also be practiced in distributed computing environments in which certain tasks are performed by remote processing devices that are linked through a communications network. In a distributed computing environment, program modules may be located in both local and remote memory storage devices.

While a few exemplary embodiments have been shown and described with reference to the accompanying drawings, it will be apparent to those skilled in the art that various modifications and variations may be made from the foregoing descriptions. For example, adequate effects may be achieved even if the foregoing processes and methods are carried out in different order than described above, and/or the aforementioned elements, such as systems, structures, devices, or circuits, are combined or coupled in different forms and modes than as described above or be substituted or switched with other components or equivalents.

Therefore, other implements, other embodiments, and equivalents to claims are within the scope of the following claims.

## Claims

1. A central management server comprising:
a W/A code collecting unit configured to collect a code (W/A code) indicating an abnormality signal, wherein the W/A code is generated by at least one of each of components operating an elevator, a control panel corresponding to the elevator, and a terminal corresponding to the control panel and is configured to include a code representing a W/A code generating entity and a problem;
a W/A code database configured to store the received W/A code, information for interpreting the W/A code, and a determination reference; and
a determination unit configured to set at least one of a warning state and an alert state for an inspection item of the elevator based on the W/A code and the determination reference.

2. The central management server of claim 1, wherein the determination reference includes a number of occurrences of the W/A code.

3. The central management server of claim 1, wherein the determination reference includes a number of occurrences of the W/A code in a pre-selected time interval.

4. The central management server of claim 1, wherein the determination reference includes a number of occurrences of the W/A code in a first pre-selected time interval and a number of occurrences in a second pre-selected interval.

5. The central management server of claim 1, wherein the components operating the elevator include an inverter.

6. The central management server of claim 1, wherein the W/A code collecting unit is further configured to collect a signal indicating the operational state of the elevator, and the determination unit is further configured to generate a new W/A code based on the signal indicating the operational state of the elevator and a pre-selected reference.

7. The central management server of claim 6, wherein the signal indicating the operational state of the elevator is a signal configured not to indicate a diagnosis subject.

8. An elevator system comprising:
an inverter configured to drive an elevator and generate a first W/A code, wherein the first W/A code includes a code representing a problem in driving the elevator;
a control panel electrically connected to the inverter and configured to store the first W/A code;
a terminal configured to transmit the first W/A code stored in the control panel; and
a central management server configured to receive the first W/A code from the terminal and set at least one of a warning state and an alert state for an inspection item of the elevator based on the first W/A code and a pre-selected reference.

9. The elevator system of claim 8, wherein
the first W/A code further includes a code representing the inverter,
the control panel is further configured to generate and transmit a second W/A code to the central management server, wherein the second W/A code is configured to include a code representing a generating entity and a problem, and
the central management server is configured to set at least one of the warning state and the alert state for the inspection item of the elevator based on the second W/A code and the pre-selected reference.

10. The elevator system of claim 8, wherein
the first W/A code further includes a code representing the inverter,
the terminal is further configured to generate and transmit a third W/A code to the central management server, wherein the third W/A code is configured to include a code representing a generating entity and a problem, and
the central management server is configured to set at least one of the warning state and the alert state for the inspection item of the elevator based on the third W/A code and the pre-selected reference.

11. The elevator system of claim 8, wherein the central management server is further configured to receive a signal including a code representing an operational state of the elevator and generate a fourth W/A code based on the signal including the code representing the operational state of the elevator and the pre-selected reference.

12. The elevator system of claim 11, wherein the signal including the code representing the operational state of the elevator does not include a generating subject.

13. A method for remotely monotoring an elevator, the method comprising:
generating, by an elevator driving component, a first W/A code, wherein the first W/A code is configured to include a code representing a problem in driving the elevator;
detecting, by a control panel, and storing the first W/A code;
transmitting, by a terminal, the stored first W/A code to a central management server; and
receiving, by the central management server, the first W/A code and setting at least one of a warning state and an alert state for an inspection item of the elevator based on the first W/A code and a pre-selected reference.

14. The method for claim 13, wherein the elevator driving component includes an inverter.

15. The method for claim 14, wherein
the first W/A code further includes a code representing the inverter, and
wherein the method further comprising:
generating, by the inverter, a signal including a code representing an operational state of the elevator without including a generating subject;
collecting, by the central management server, a signal including a code representing an operational state of the elevator; and
generating, by the central management server, a fourth W/A code based on a signal including a code representing the operational state of the elevator and a pre-selected reference.
